# FASCICULE DE BREVET EUROPEEN

(11) **EP 2 902 317 B1**
(45) Date de publication et mention de la délivrance du brevet: **17.08.2016**
(21) Numéro de dépôt: 15000019.8
(22) Date de dépôt: 07.01.2015
(51) Int. Cl.: B64C 25/54, B64C 25/56

(54) **Système de flottabilité pour aéronef, et aéronef**
Schwimmwerksystem für Luftfahrzeug, und entsprechendes Luftfahrzeug
Buoyancy system for aircraft, and aircraft

(30) Priorité: 31.01.2014 FR 1400277
(43) Date de publication de la demande: 05.08.2015
(73) Titulaire: Airbus Helicopters, 13725 Marignane Cedex (FR)
(72) Inventeur: Dijaux, Nicolas, 13140 Miramas (FR)
(74) Mandataire: GPI & Associés

(56) Documents cités:
- JP-A- 2010 064 697
- US-A- 2 271 065
- US-A- 2 702 171

## Description

La présente invention concerne un système de flottabilité pour aéronef, et un aéronef muni d'un système de flottabilité.

Dès lors, l'invention se situe dans le domaine technique des systèmes de flottabilité permettant l'amerrissage et la stabilité à flot d'un aéronef, et plus particulièrement un aéronef à voilure tournante.

Un tel système de flottabilité participe à la flottaison et la stabilité d'un aéronef suite à un amerrissage. Le système de flottabilité peut être par exemple utilisé suite à un amerrissage forcé, pour permettre l'évacuation des occupants de cet aéronef. Tous les appareils voués aux missions de transport de personnes en zones maritimes sont équipés en principe d'un tel système de flottabilité.

Des règlements de certification précisent d'ailleurs qu'un aéronef doit pouvoir amerrir et être stable sur l'eau avec son système de flottabilité. La stabilité doit être avérée pour des états de surface libre de l'eau et des niveaux de vent qui sont définis dans ces règlements de certification.

Ces états de surface libre de l'eau sont aussi nommés « état de mer », et s'appliquent à toute surface liquide. Le terme « amerrissage » couvre aussi le posé d'un aéronef sur toute surface libre d'eau, que ce soit sur la mer ou un lac par exemple.

Un système de flottabilité peut comprendre des flotteurs dont le déploiement est commandé soit par le pilote et/ou le copilote par exemple, soit par déclenchement automatique notamment grâce à un ou des détecteur(s) d'immersion. Ces flotteurs peuvent comprendre des outres gonflées par un moyen de déploiement explosif ou électrique par exemple.

Des flotteurs peuvent être appariés. Chaque paire de flotteurs comprend ainsi deux flotteurs disposés transversalement de part et d'autre du fuselage de l'aéronef. L'espace séparant transversalement deux flotteurs est dénommé par commodité espace inter-flotteur.

Par exemple, un giravion est muni de deux paires de flotteurs.

Le document JP 61-171699 et le document US 2003/057322 dévoilent un système de flottabilité accroché à un patin d'un hélicoptère.

Un système de flottabilité peut aussi comprendre des flotteurs structuraux non gonflables.

On connaît ainsi des systèmes de flottabilité munis de flotteurs fixés à un fuselage d'un aéronef par des ralingues rigides, à savoir non élastiques.

Le document US3467343 décrit un système de flottabilité muni de flotteurs verticaux gonflés par de l'air comprimé. Les flotteurs sont pourvus de roues manoeuvrées par des vérins hydrauliques.

Par ailleurs, l'aéronef peut s'incliner latéralement sous l'effet du vent ou de vagues. Les flotteurs présents du côté vers lequel l'aéronef bascule s'enfonce dans l'eau ce qui augmente le couple de redressement exercé par ces flotteurs sur l'aéronef. Ce couple de redressement tend à redresser l'aéronef.

Toutefois, si la vague est importante, les flotteurs peuvent être entièrement immergés. Le couple de redressement tend alors à diminuer.

A partir d'une position extrême dans laquelle le centre de gravité de l'aéronef n'est pas à l'aplomb de l'espace inter-flotteurs, l'aéronef chavire.

Le document JP 2010 064697 (NAT UNIV YOKOHAMA) présente ainsi un aéronef muni d'un fuselage et de deux flotteurs. Des moyens se déforment élastiquement pour écarter les flotteurs à l'amerrissage.

Le document US2271065 (DORNIER JR CLAUDIUS) décrit un aéronef comprenant deux flotteurs rétractables qui s'écartent d'un fuselage avant un amerrissage.

On connaît aussi le document US 2702171.

La présente invention a alors pour objet de proposer un système de flottabilité et un aéronef visant notamment à présenter une stabilité optimisée suite à un amerrissage.

L'invention vise donc un système de flottabilité d'un aéronef, ce système de flottabilité étant muni d'au moins deux flotteurs aptes à être agencés de part et d'autre d'un fuselage de l'aéronef, le système de flottabilité comportant un dispositif de liaison par flotteur, chaque dispositif de liaison étant apte à attacher un flotteur à une structure d'un aéronef et autorisant un déplacement de ce flotteur par rapport au fuselage.

De plus, chaque dispositif de liaison inclut au moins un lien élastique et au moins une lien non élastique fixés au flotteur et aptes à être fixés à ladite structure, chaque lien non élastique étant plié lorsque le flotteur est contre le fuselage de manière à pouvoir être étendu, chaque lien non élastique limitant l'amplitude de déplacement du flotteur sous l'effet de la poussée d'Archimède et chaque lien élastique exerçant une force de rappel sur le flotteur.

On entend classiquement par lien élastique une ralingue ou une corde extensible pouvant s'allonger significativement suite à un effort de traction, et exerçant un effort de rappel pour tendre à revenir dans sa forme initiale lorsque cet effort de traction diminue ou disparaît.

A l'inverse, on entend classiquement par lien non élastique une ralingue ou une corde non extensible ne pouvant pas s'allonger significativement suite à un effort de traction.

L'emploi des termes relatifs « élastique » et « non élastique » permet par suite de clairement qualifier les liens associés.

Dès lors et suite à un amerrissage, les flotteurs sont plaqués contre le fuselage de l'aéronef par les liens élastiques tant que l'aéronef ne bascule pas. Les liens non élastiques sont alors pliés en formant au moins une boucle par exemple. Par contre, les liens élastiques peuvent être tendus pour exercer un effort de rappel sur les flotteurs.

Si l'aéronef s'incline suite à un vent violent ou à la présence d'une vague importante, les flotteurs situées du côté vers lequel penche l'aéronef s'enfoncent sous l'eau.

Cependant, lorsque les flotteurs sont totalement enfoncés sous l'eau, la poussée d'Archimède exercée sur les flotteurs génère un déplacement de ces flotteurs par rapport au fuselage. Ce déplacement est autorisé d'une part par les liens élastiques compte tenu de leur élasticité, mais aussi par les liens non élastiques. En effet, les liens non élastiques peuvent se déplier pour autoriser un déplacement maximal du flotteur par rapport au fuselage.

Ce déplacement des flotteurs augmente l'angle de basculement maximal de l'aéronef avant un chavirement.

Par suite, ce système peut éventuellement permettre d'optimiser la stabilité à flot sur vagues régulières de l'aéronef, en autorisant des inclinaisons plus importantes. A iso-volume flottant par rapport à un aéronef dépourvu de l'invention, le système de flottabilité peut permettre à un aéronef de supporter un état de mer plus sévère suite à un amerrissage.

En outre, ce système peut éventuellement permettre d'optimiser la stabilité à flot sur vagues irrégulières en amortissant des changements brusques et multidirectionnels du plan d'eau via les liens élastiques.

Par ailleurs, l'amerrissage induit des efforts importants sur les ferrures de fixation d'un dispositif de liaison fixé sur un aéronef. Le caractère élastique des liens élastiques et le fait que les liens non élastiques puissent se déplier peuvent tendre à diminuer ces efforts sur les ferrures.

En outre, les risques de dommage suite à l'impact résultant de l'amerrissage peuvent être réduits.

Le système de flottabilité peut de plus comporter une ou plusieurs des caractéristiques qui suivent.

Chaque lien non élastique présentant une première longueur d'extension en étant déplié, chaque lien élastique présentant une deuxième longueur d'extension en l'absence d'effort exercé sur ce lien élastique, la première longueur d'extension est supérieure à ladite deuxième longueur d'extension.

Cette caractéristique permet d'obtenir un lien non extensible qui ne s'étend pas sur la totalité de sa longueur lorsque le flotteur est à flot. Lorsque le flotteur est sous l'eau, le lien non extensible peut alors être déplié pour permettre un déplacement du flotteur sous l'effet de la poussée d'Archimède.

Chaque lien élastique atteignant une longueur maximale avant de rompre sous l'effet d'un effort de traction, chaque lien non élastique présentant une première longueur d'extension, la première longueur d'extension est inférieure ou égale à ladite longueur maximale.

Un lien élastique est par définition extensible jusqu'à un certain point. Au-delà d'un allongement à rupture atteint lorsque le lien élastique s'étend sur ladite longueur maximale, le lien élastique rompt.

Dès lors, cette caractéristique vise à garantir que le lien élastique ne va pas rompre. La marge présente entre la longueur maximale et la première longueur d'extension est déterminée en fonction de l'emplacement relatif des liens.

Par exemple, au moins un lien non élastique et un lien élastique sont fixés à un même point de fixation d'un flotteur.

Cependant, ces liens peuvent être décalés. Le décalage est alors pris en considération lors du dimensionnement du système de flottabilité.

En outre, au moins un dispositif de liaison peut comporter au moins une paire de liens comprenant un lien non élastique et un lien élastique.

Selon une réalisation, chaque dispositif de liaison comporte au moins deux liens élastiques situés de part et d'autre de deux liens non élastiques.

Par exemple, au moins un dispositif de liaison comporte une paire de liens dite « paire supérieure » située à l'aplomb d'une paire de liens dite « paire inférieure ».

Selon un autre aspect, le système de flottabilité comporte au moins un gonfleur pour gonfler les flotteurs et au moins un dispositif de commande du gonfleur relié à au moins un gonfleur pour requérir le gonflement des flotteurs. Ce dispositif de commande peut comprendre des moyens manuels et / ou automatiques usuels. On se référera à la littérature pour obtenir des informations relatives aux dispositifs de commande et aux gonfleurs connus.

Outre un système de flottabilité, l'invention vise un aéronef muni d'un fuselage et d'un système de flottabilité, ce système de flottabilité étant muni d'au moins deux flotteurs agencés de part et d'autre du fuselage. Plus particulièrement, le système de flottabilité est un système selon l'invention du type décrit précédemment.

L'invention et ses avantages apparaîtront avec plus de détails dans le cadre de la description qui suit avec des exemples donnés à titre illustratif en référence aux figures annexées qui représentent :
- la figure 1, une vue d'un aéronef selon l'invention,
- la figure 2, une vue présentant un flotteur accroché à un aéronef par deux paires de liens selon l'invention,
- la figure 3, un schéma explicitant les longueurs des liens, et
- les figures 4 à 6, des schémas explicitant le fonctionnement de l'invention.

Les éléments présents dans plusieurs figures distinctes sont affectés d'une seule et même référence.

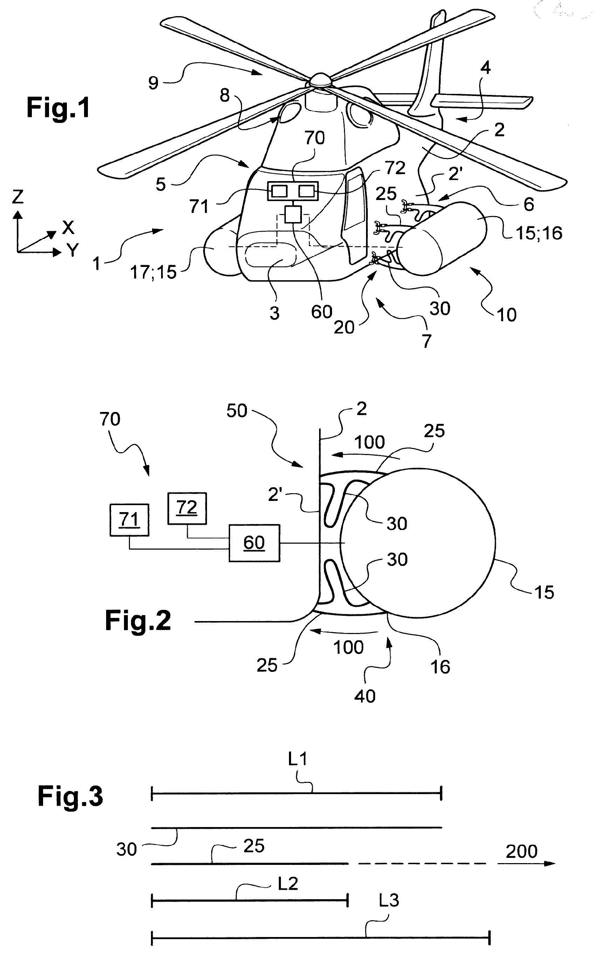

La figure 1 présente un aéronef 1 selon l'invention.

Cet aéronef comprend un fuselage 2 s'étendant en longueur d'une extrémité avant 3 vers une extrémité arrière 4. De plus, le fuselage 2 s'étend en largeur d'un flanc droit 5 vers un flanc gauche 6, et en élévation d'une partie basse 7 vers une partie haute 8.

La partie basse est classiquement munie d'un train d'atterrissage, alors que la partie haute 8 peut porter un rotor 9 de sustentation voire de propulsion. La partie basse peut inclure une barque délimitée notamment par le plancher d'une cabine et l'enveloppe extérieure du fuselage.

Cet aéronef 1 est pourvu d'un système de flottabilité 10 selon l'invention afin de pouvoir se poser sur l'eau.

Un tel système de flottabilité 10 est pourvu d'au moins deux flotteurs 15 agencés de part et d'autre du fuselage 2 de l'aéronef. Ainsi, un flotteur gauche 16 est disposé du côté du flanc gauche de l'aéronef, alors qu'un flotteur droit 17 est disposé du côté du flanc droit de l'aéronef.

Les flotteurs peuvent être appariés. Dès lors, les flotteurs d'une paire peuvent être disposés symétriquement de part et d'autre d'un plan antéropostérieur de symétrie de l'aéronef dans une position stable de l'aéronef. Par exemple, l'aéronef représenté comporte une unique paire de flotteurs 15.

Les flotteurs sont des flotteurs gonflables. En dehors des phases d'amerrissage, chaque flotteur peut être plié dans un compartiment de l'aéronef, éventuellement obturé en vol par un capot ou équivalent. Un flotteur comporte alors une outre gonflable délimitée par une enveloppe extérieure.

Pour gonfler les flotteurs, le système de flottabilité 10 inclut de plus au moins un gonfleur 60. Par exemple mais non exclusivement, un gonfleur 60 est relié à une pluralité de flotteurs 15 selon la figure 1.

De plus, le système de flottabilité est pourvu d'au moins un dispositif de commande 70 pour commander au moins un gonfleur. Ce dispositif de commande 70 est alors relié à au moins un gonfleur 60 pour requérir le gonflement des flotteurs 15.

Ce dispositif de commande 70 peut être muni d'un système de commande manuel 71 et / ou d'un système de commande automatique 72 usuels.

Par ailleurs, le système de flottabilité comporte un dispositif de liaison 20 par flotteur pour attacher ce flotteur à une structure 2' de l'aéronef 1.

Chaque dispositif de liaison 20 est muni d'au moins un lien élastique 25 qui est fixé d'une part au flotteur 15 associé et à la structure 2'. De plus, le dispositif de liaison 20 possède au moins un lien non élastique 30 qui est fixé d'une part au flotteur 15 associé et à la structure 2'.

Ce dispositif de liaison permet au flotteur de se mouvoir sous l'effet de la pression d'un liquide à partir d'une position dite « position normale » dans laquelle le flotteur est au plus près du fuselage, et par exemple du compartiment accueillant le flotteur non gonflé.

A cet effet, chaque lien élastique 25 d'un flotteur tend à positionner le flotteur 15 dans cette position normale. En outre, dans la position normale, chaque lien non élastique 30 est plié, et peut donc potentiellement être déplié pour s'étendre et laisser une liberté de mouvement au flotteur. De même, le caractère élastique de chaque lien élastique confère à ce lien élastique une liberté d'extension.

La figure 2 présente un flotteur dans une telle position normale. Le flotteur est légèrement décalé par rapport au fuselage 2, mais pourrait être accolé à ce fuselage dans cette position.

Selon cette réalisation, les liens élastiques 25 et non élastiques 30 sont appariés.

En effet, un dispositif de liaison 20 peut comporter au moins une paire de liens comprenant un lien non élastique 30 et un lien élastique 25.

Par exemple, au moins un dispositif de liaison 20 comporte une paire de liens dite « paire supérieure 50 » située à l'aplomb d'une paire de liens dite « paire inférieure 40 » pour optimiser le maintien du flotteur.

Plus précisément, ce dispositif de liaison 20 comporte au moins deux liens élastiques 25 situés de part et d'autre de deux liens non élastiques 30.

Par ailleurs, au moins un lien non élastique 30 et un lien élastique 25 peuvent être fixés à un même point de fixation 16 d'un flotteur 15 et / ou un même point de fixation de la structure 2' par des ferrures ou équivalents.

En référence à la figure 3, chaque lien non élastique 30 présente une première longueur d'extension L1 en étant déplié. Ce lien non élastique n'est pas élastique et ne peut donc pas être étendu pour posséder une longueur supérieure à la première longueur d'extension L1.

Par ailleurs, chaque lien élastique 25 présente une deuxième longueur d'extension L2 en l'absence d'effort 200 exercé sur ce lien élastique 25.

Par suite, la première longueur d'extension L1 est supérieure à la deuxième longueur d'extension L2. Il en résulte que le lien non élastique peut être plié dans la position normale.

Par contre, chaque lien élastique 25 peut atteindre une longueur maximale L3 avant de rompre sous l'effet d'un effort 200 de traction. Cette longueur maximale L3 est déterminée pour permettre à chaque lien non élastique d'atteindre la première longueur d'extension L1 par exemple.

Ainsi, la première longueur d'extension L1 peut éventuellement être inférieure ou égale à la longueur maximal L3.

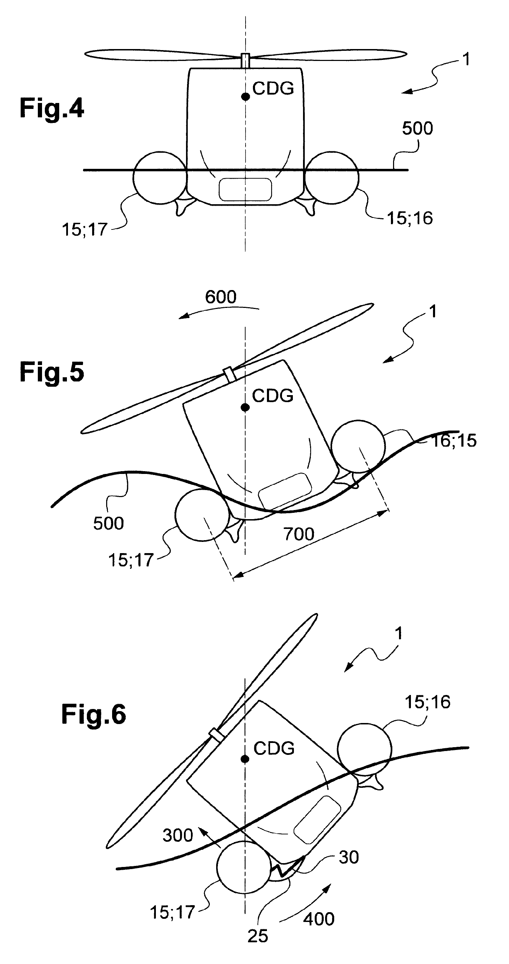

Les figures 4 à 6 explicitent le fonctionnement de l'invention

La figure 4 illustre une situation pour laquelle la surface liquide 500 est calme. Les flotteurs sont alors dans la position normale, l'aéronef étant par suite stable.

En référence à la figure 5, lorsque la surface liquide 500 est agitée ou en présence d'un coup de vent, l'aéronef peut s'incliner vers un côté selon la flèche 600, par exemple vers le côté gauche. Les flotteurs présents de ce côté peuvent alors s'enfoncer dans la surface liquide. Tant que le centre de gravité CDG demeure à l'aplomb de l'espace inter-flotteur 700, l'aéronef reste à flot.

En référence à la figure 6, si l'inclinaison est importante les flotteurs peuvent être totalement enfoncés dans l'eau.

Selon l'état de la technique, cette situation peut conduire à un chavirement.

Toutefois et selon l'invention, la poussée d'Archimède exercée sur les flotteurs présents sous la surface liquide induit le déplacement des flotteurs concernés vers la surface selon la flèche 300. Ce mouvement est autorisé par les liens élastiques 25 qui s'étendent, et les liens non élastiques 30 qui se déplient.

Cette caractéristique peut donc permettre de repousser la limite d'inclinaison conduisant à un chavirement.

En outre, chaque lien élastique exerce un effort de rappel 400 tendant à replacer le flotteur dans sa position normale et à redresser l'aéronef.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système de flottabilité (10) d'un aéronef (1), ce système de flottabilité (10) étant muni d'au moins deux flotteurs (15) aptes à être agencés de part et d'autre d'un fuselage (2) de l'aéronef (1), ledit système de flottabilité (10) comportant un dispositif de liaison (20) par flotteur (15), chaque dispositif de liaison (20) étant apte à attacher un flotteur (15) à une structure (2') d'un aéronef (1) et autorisant un déplacement de ce flotteur (15) par rapport au fuselage (2),
**caractérisé en ce que** chaque dispositif de liaison (20) inclut au moins un lien élastique (25) et au moins un lien non élastique (30) fixés au flotteur (15) et aptes à être fixés à ladite structure (2'), chaque lien non élastique (30) étant plié lorsque le flotteur (15) est contre le fuselage (2) de manière à pouvoir être étendu, chaque lien non élastique (30) limitant l'amplitude de déplacement du flotteur (15) sous l'effet de la poussée d'Archimède et chaque lien élastique (25) exerçant une force de rappel (100) sur le flotteur (15).

2. Système de flottabilité selon la revendication 1,
**caractérisé en ce que** chaque lien non élastique (30) présentant une première longueur d'extension (L1) en étant déplié, chaque lien élastique (25) présentant une deuxième longueur d'extension (L2) en l'absence d'effort (200) exercé sur ce lien élastique (25), ladite première longueur d'extension (L1) est supérieure à ladite deuxième longueur d'extension (L2).

3. Système de flottabilité selon l'une quelconque des revendications 1 à 2,
**caractérisé en ce que** chaque lien élastique (25) atteignant une longueur maximal (L3) avant de rompre sous l'effet d'un effort (200) de traction, chaque lien non élastique (30) présentant une première longueur d'extension (L1), ladite première longueur d'extension (L1) est inférieure ou égale à ladite longueur maximale (L3).

4. Système de flottabilité selon l'une quelconque des revendications 1 à 3,
**caractérisé en ce qu'**au moins un lien non élastique (30) et un lien élastique (25) sont fixés à un même point de fixation (16) d'un flotteur (15).

5. Système de flottabilité selon l'une quelconque des revendications 1 à 4,
**caractérisé en ce que** chaque dispositif de liaison (20) comporte au moins deux liens élastiques (30) situés de part et d'autre de deux liens non élastiques (25).

6. Système de flottabilité selon l'une quelconque des revendications 1 à 5,
**caractérisé en ce qu'**au moins un dispositif de liaison (20) comporte au moins une paire de liens (30, 25) comprenant un lien non élastique (30) et un lien élastique (25).

7. Système de flottabilité selon l'une quelconque des revendications 1 à 6,
**caractérisé en ce qu'**au moins un dispositif de liaison (20) comporte une paire de liens dite « paire supérieure (50) » située à l'aplomb d'une paire de liens dite « paire inférieure (40) ».

8. Système de flottabilité selon l'une quelconque des revendications 1 à 7,
**caractérisé en ce que** ledit système de flottabilité (10) comporte au moins un gonfleur (60) pour gonfler lesdits flotteurs (15) et au moins un dispositif de commande (70) du gonfleur relié à au moins un gonfleur (60) pour requérir le gonflement des flotteurs (15).

9. Aéronef (1) muni d'un fuselage (2) et d'un système de flottabilité (10), ce système de flottabilité (10) étant muni d'au moins deux flotteurs (15) agencés de part et d'autre du fuselage (2),
**caractérisé en ce que** ledit système de flottabilité (10) est selon l'une quelconque des revendications 1 à 8.

## Patentansprüche

1. Schwimmwerksystem (10) eines Luftfahrzeugs (1), wobei dieses Schwimmwerksystem (10) mit mindestens zwei Schwimmern (15) versehen ist, die zu beiden Seiten eines Rumpfes (2) des Luftfahrzeugs (1) angebracht werden können, wobei das Schwimmwerksystem (10) eine Verbindungsvorrichtung (20) pro Schwimmer (15) aufweist, wobei jede Verbindungsvorrichtung (20) einen Schwimmer (15) an einem Tragwerk (2') eines Luftfahrzeugs (1) befestigen und eine Verlagerung dieses Schwimmers (15) relativ zu dem Rumpf (2) zulassen kann,
**dadurch gekennzeichnet, dass** jede Verbindungsvorrichtung (20) mindestens eine elastische Verbindung (25) und mindestens eine nicht-elastische Verbindung (30) umfasst, die an dem Schwimmer (15) befestigt sind und an dem Tragwerk (2') befestigt werden können, wobei jede nicht-elastische Verbindung (30) eingeklappt ist, wenn der Schwimmer (15) am Rumpf (2) anliegt, derart, dass er aufgeklappt werden kann, wobei jede nicht-elastische Verbindung (30) den Verlagerungshub des Schwimmers (15) unter der Einwirkung des statischen Auftriebs begrenzt und wobei jede elastische Verbindung (25) eine Rückstellkraft (100) auf den Schwimmer (15) ausübt.

2. Schwimmwerksystem nach Anspruch 1,
**dadurch gekennzeichnet, dass** jede nicht-elastische Verbindung (30) in aufgeklappter Stellung eine erste Erstreckungslänge (L1) aufweist, wobei jede elastische Verbindung (25) eine zweite Erstreckungslänge (L2) in Abwesenheit einer auf diese elastische Verbindung (25) ausgeübten Kraft (200) aufweist, wobei die erste Erstreckungslänge (L1) größer ist als die zweite Erstreckungslänge (L2).

3. Schwimmwerksystem nach einem der Ansprüche 1 bis 2,
**dadurch gekennzeichnet, dass** jede elastische Verbindung (25) vor einem Bruch unter Einwirkung einer Zugkraft (200) eine maximale Länge (L3) erreicht, wobei jede nicht-elastische Verbindung (30) eine erste Erstreckungslänge (L1) aufweist, wobei die erste Erstreckungslänge (L1) kleiner oder gleich der maximalen Länge (L3) ist.

4. Schwimmwerksystem nach einem der Ansprüche 1 bis 3,
**dadurch gekennzeichnet, dass** mindestens eine nicht-elastische Verbindung (30) und eine elastische Verbindung (25) an ein und demselben Befestigungspunkt (16) eines Schwimmers (15) befestigt sind.

5. Schwimmwerksystem nach einem der Ansprüche 1 bis 4,
**dadurch gekennzeichnet, dass** jede Verbindungsvorrichtung (20) mindestens zwei elastische Verbindungen (30) aufweist, die zu beiden Seiten von zwei nicht-elastischen Verbindungen (25) gelegen sind.

6. Schwimmwerksystem nach einem der Ansprüche 1 bis 5,
**dadurch gekennzeichnet, dass** mindestens eine Verbindungsvorrichtung (20) mindestens ein Paar von Verbindungen (30, 25) aufweist, das eine nicht-elastische Verbindung (30) und eine elastische Verbindung (25) umfasst.

7. Schwimmwerksystem nach einem der Ansprüche 1 bis 6,
**dadurch gekennzeichnet, dass** mindestens eine Verbindungsvorrichtung (20) ein "oberes Paar (50)" genanntes Paar von Verbindungen aufweist, das oberhalb eines "unteres Paar (40)" genannten Paares angeordnet ist.

8. Schwimmwerksystem nach einem der Ansprüche 1 bis 7,
**dadurch gekennzeichnet, dass** das Schwimmwerksystem (10) mindestens eine Aufblasvorrichtung (60) zum Aufblasen der Schwimmer (15) und mindestens eine Steuervorrichtung (70) der Aufblasvorrichtung aufweist, die mit mindestens einer Aufblasvorrichtung (60) verbunden ist, um das Aufblasen der Schwimmer (15) anzufordern.

9. Luftfahrzeug (1) mit einem Rumpf (2) und einem Schwimmwerksystem (10), wobei dieses Schwimmwerksystem (10) mit mindestens zwei Schwimmern (15) versehen ist, die zu beiden Seiten des Rumpfes (2) angeordnet sind,
**dadurch gekennzeichnet, dass** das Schwimmwerksystem (10) gemäß einem der Ansprüche 1 bis 8 ausgebildet ist.

## Claims

1. A buoyancy system (10) of an aircraft (1), this buoyancy system (10) being equipped with at least two floats (15) suitable for being arranged on either side of a fuselage (2) of the aircraft (1), said buoyancy system (10) comprising one linking device (20) per float (15), each linking device (20) being suitable for attaching a float (15) to a structure (2') of an aircraft (1) and enabling this float (15) to be displaced in relation to the fuselage (2),
**characterised in that** each linking device (20) includes at least one resilient link (25) and at least one non-resilient link (30) that are fixed to the float (15) and are suitable for being fixed to said structure (2'), each non-resilient link (30) being folded when the float (15) is against the fuselage (2) such that it may be extended, each non-resilient link (30) limiting the amplitude of displacement of the float (15) under the effect of Archimedes' principle and each resilient link (25) exerting a restoring force (100) on the float (15).

2. A buoyancy system according to Claim 1, **characterised in that**, each non-resilient link (30) having a first extension length (L1) when unfolded, each resilient link (25) having a second extension length (L2) in the absence of force (200) exerted on this resilient link (25), said first extension length (L1) is greater than said second extension length (L2).

3. A buoyancy system according to any one of Claims 1 to 2, **characterised in that**, each resilient link (25) reaching a maximum length (L3) before breaking under the effect of a tensile force (200), each non-resilient link (30) having a first extension length (L1), said first extension length (L1) is less than or equal to said maximum length (L3).

4. A buoyancy system according to any one of Claims 1 to 3, **characterised in that** at least one non-resilient link (30) and a resilient link (25) are fixed to a single fixing point (16) on a float (15).

5. A buoyancy system according to any one of Claims 1 to 4, **characterised in that** each linking device (20) comprises at least two resilient links (30) located on either side of two non-resilient finks (25).

6. A buoyancy system according to any one of Claims 1 to 5, **characterised in that** at least one linking device (20) comprises at least one pair of links (30, 25) comprising a non-resilient link (30) and a resilient link (25).

7. A buoyancy system according to any one of Claims 1 to 6, **characterised in that** at least one linking device (20) comprises a pair of links called the "upper pair (50)" and located above a pair of links called the "lower pair (40)".

8. A buoyancy system according to any one of Claims 1 to 7, **characterised in that** said buoyancy system (10) comprises at least one inflator (60) for inflating said floats (15) and at least one control device (70), for controlling the inflator, connected to at least one inflator (60) for requesting inflation of the floats (15).

9. An aircraft (1) equipped with a fuselage (2) and a buoyancy system (10), this buoyancy system (10) being equipped with at least two floats (15) that are arranged on either side of the fuselage (2),
**characterised in that** said buoyancy system (10) is according to any one of Claims 1 to 8.
